# EUROPÄISCHE PATENTANMELDUNG

(11) **EP 3 001 053 A1**
(43) Veröffentlichungstag der Anmeldung: **30.03.2016**
(21) Anmeldenummer: 15187289.2
(22) Anmeldetag: 29.09.2015
(51) Int. Cl.: F16C 19/54, F16C 19/38, F16C 35/077

(54) **LAGERANORDNUNG**

(30) Priorität: 29.09.2014 DE 102014219730
(71) Anmelder: Aktiebolaget SKF, 41 550 Göteborg (SE)
(72) Erfinder: Breunig, Heinz, 63743 Aschaffenburg (DE); Glaentz, Wolfgang, 97422 Schweinfurt (DE); Herbst, Hubert, 97503 Gädheim (DE); Wainus, Jörg, 97535 Wasserlosen (DE); Wendt, Volker, 97532 Üchtelhausen/Zell (DE)
(74) Vertreter: Kuhstrebe, Jochen

(57) **Zusammenfassung**

Lageranordnung (1) zur Lagerung einer Welle (2) in einem Gehäuse (3), umfassend ein erstes Wälzlager (4) und ein zweites Wälzlager (5), wobei die beiden Wälzlager (4, 5) unter axialer Vorspannung oder mit definierter axialer Lagerluft in der Lageranordnung (1) eingebaut sind. Um eine übermäßig große Lagerluft im Betrieb der Lageranordnung zu verhindern, sieht die Erfindung vor, dass zwischen dem Außenring (6) des ersten Wälzlagers (4) und dem Gehäuse (3) ein erstes Verschiebeelement (7) wirksam angeordnet ist und dass zwischen dem Außenring (8) des zweiten Wälzlagers (5) und dem Gehäuse (3) ein zweites Verschiebeelement (9) wirksam angeordnet ist, wobei beide Verschiebeelemente (7, 9) bei Änderung ihrer Temperatur eine axiale Verschiebung zwischen dem sie tragenden Außenring (6, 8) und dem Gehäuse (3) bewerkstelligen.

## Beschreibung

Die Erfindung betrifft eine Lageranordnung zur Lagerung einer Welle in einem Gehäuse, umfassend ein erstes Wälzlager und ein zweites Wälzlager, wobei die beiden Wälzlager unter axialer Vorspannung oder mit definierter axialer Lagerluft in der Lageranordnung eingebaut sind, wobei zwischen dem Außenring des ersten Wälzlagers und dem Gehäuse ein erstes Verschiebeelement - in axiale Richtung - wirksam angeordnet ist, wobei zwischen dem Außenring des zweiten Wälzlagers und dem Gehäuse ein zweites Verschiebeelement - in axiale Richtung - wirksam angeordnet ist und wobei beide Verschiebeelemente bei Änderung ihrer Temperatur eine axiale Verschiebung zwischen dem sie tragenden Außenring und dem Gehäuse bewerkstelligen.

Eine gattungsgemäße Lageranordnung ist aus der US 5 028 152 A bekannt. Ähnliche und andere Lösungen zeigen die DE 18 13 409 A**,** die DE 10 2010 054 409 A1**,** die WO 2012/097962 A2, die DE 41 18 933 A1, die DE 10 2010 048 546 A1, die DE 10 2007 018 929 A1, die DE 10 2006 053 731 A1, die US 2012/0106886 A1**,** die WO 2006/014934 A1 und die DE 10 2009 056 615 A1**.**

Vorgespannte Lageranordnungen der genannten Art sind im Stand der Technik hinlänglich bekannt und gebräuchlich. Häufig werden zwei Kegelrollenlager (aber beispielsweise auch Schrägkugellager, Axialrollenlager oder Axialkugellager) axial gegeneinander verspannt, um eine spielfreie Lagerung oder eine mit definierter Lagerluft behaftete Lagerung einer Welle in einem Gehäuse zu bewerkstelligen.

Insbesondere in Industriegetrieben besteht häufig das Problem, dass sich im Anfahrbetrieb die eingestellte Lagerluft in den Lagern temporär stark reduziert. Dies ist insbesondere dann der Fall, wenn das Anfahren des Getriebes zeitlich stark begrenzt wird.

Es kann hierbei die Situation auftreten, dass sich die bewegten Teile der Lagerrung, d. h. die Welle und die Innenringe der Wälzlager, bereits relativ stark erwärmen, während das Gehäuse mit den Lageraußenringen noch keine relevante Temperaturdehnung erfahren. Demgemäß reduziert sich dann temporär die Lagerluft in der Lageranordnung; bei nicht ausreichend bemessener Lagerluft kann ein übermäßiger Vorspannungszustand erreicht werden, der das Lager stark belastet und zu einem frühzeitigen Lagerausfall führen kann.

Die einzige Maßnahme, um dies zu vermeiden, ist es, die Lagerluft entsprechend zu erhöhen bzw. groß zu wählen, um auch in dem genannten temporären Zustand der Abnahme der Lagerluft nicht zu klein werden zu lassen und somit zu verhindern, dass die Lageranordnung in einen übermäßigen Vorspannungszustand gerät.

Nachteilig ist dann aber, dass - sobald sich das Gehäuse auf Betriebstemperatur erwärmt hat - nach dem Durchlaufen des Anfahrzeitraums die Lagerluft entsprechend weiter anwächst. Dies ist gleichermaßen sehr nachteilig. Beispielsweise verlagern sich bei unzulässiger Lufterhöhung die Eingriffspunkte einer Verzahnung, die auf der Welle montiert ist, so dass der optimale Verzahnungseingriff nicht mehr vorliegt.

Weiterhin ist es sehr ungünstig, dass bei einer zu hohen Lagerluft stets weniger Wälzkörper in den Wälzlagern belastet werden, die Belastung der Lageranordnung aber nicht abnimmt. Somit erhöhen sich die Kontakspannungen der wenigen tragenden Wälzkörper sehr stark, was unter Umständen wiederum zu einem vorzeitigen Lagerausfall führen kann.

Der Erfindung liegt die Aufgabe zugrunde, ein gattungsgemäßes Lageranordnung so fortzubilden, dass sichergestellt ist, dass einerseits im Anfahrzustand der Lageranordnung keine zu hohe Vorspannung in den Lagern vorliegt, dass andererseits aber im regulären Betrieb der Lageranordnung eine übermäßig große Lagerluft verhindert wird.

Die Lösung dieser Aufgabe durch die Erfindung ist dadurch gekennzeichnet, dass mindestens eines der beiden Verschiebeelemente mit einer Heizeinrichtung versehen ist.

Die beiden Wälzlager sind bevorzugt Kegelrollenlager. Diese sind bevorzugt in X-Anordnung positioniert.

Die beiden Verschiebeelemente können in Ausnehmungen, insbesondere in Eindrehungen, der Außenring angeordnet sein.

Auf der Welle kann mindestens ein Zahnrad angeordnet sein, wobei die beiden Verschiebeelemente insbesondere in diesem Falle unterschiedlich ausgebildet sind.

Die Heizeinrichtung ist dabei bevorzugt ein elektrisches Heizelement.

Die beiden Verschiebeelemente bestehen bevorzugt aus einem Material mit hohem Wärmeausdehnungskoeffizienten, insbesondere aus einem Leichtmetall oder aus Kunststoff.

Die beiden Verschiebeelemente liegen bevorzugt direkt oder indirekt an einer Stirnfläche an, die im Gehäuse ausgebildet ist. Dabei ist bevorzugt vorgesehen, dass eine Stirnfläche durch einen Deckel gebildet wird, der am Gehäuse angeschraubt ist.

Somit stellt die vorliegende Erfindung ein System zur Verfügung, das einen Zuwachs der Lagerluft im Gehäuse bei dessen Erwärmung kompensieren kann.

Die hier zum Einsatz kommenden Verschiebeelemente sind als solche im Stand der Technik bekannt. Es wird exemplarisch auf DE 42 21 802 A1 und auf die DE 10 2007 043 474 A1 ausdrücklich Bezug genommen.

Durch die gezielte Auslegung der Verschiebeelemente (bzw. Dehnringe) kann eine übermäßige Lagerluft über den Anfahrzeitraum hinaus sicher vermieden werden.

Demgemäß werden die beschriebenen Verschiebeelemente im beim Anfahren "kalten" Gehäuse angeordnet, um die thermische Expansion auf die Lagerluft nach der Eigenerwärmung des Gehäuses zu kompensieren.

Weiterhin lässt sich durch fachmännische Dimensionierung der Verschiebeelemente (Dehnringe) ein stets gegebener optimaler Betriebspunkt für einen Zahneingriff sicherstellen. Gegebenenfalls verändert nämlich die Gehäuseerwärmung, die Wellenerwärmung oder die Lagererwärmung selbst bei optimal eingestellten Getrieben den Zahneingriffspunkt im Laufe des thermischen Gangs der Lageranordnung. Durch die Verwendung von nicht identischen Verschiebeelementen (unsymmetrisch zur Mitte der Lageranordnung) kann erreicht werden, dass sich an den beiden Lagern jeweils definierte Verschiebungen ergeben, so dass die korrekte Positionierung der Verzahnung stets aufrechterhalten wird. Dabei ist es möglich, Verschiebeelemente mit unterschiedlichen Volumina einzusetzen oder auch nur eines der Elemente genau an die Verzahnung anzupassen.

Um im gegebenen Falle auf spezielle Belastungsituationen mit kritischen Zahneingriffveränderungen Rücksicht nehmen zu können, die in der Auslegung der Verschiebeelemente direkt nicht erfaßt werden, ist es möglich, Heizelemente (Wärmeschleifen) in den Dehnring, d. h. in das Verschiebeelement einzubringen, mit denen ein aktiv gesteuertes Temperieren und somit die Ausdehnung (Volumenänderung) des Dehnringes beeinflusst werden kann. Somit lassen sich auch axiale Verschiebungen der Welle und des angebrachten Zahnrades erzeugen, die den Zahneingriff in seinem Optimum halten.

Als Material für die Verschiebeelemente kommt vor allem Leichtmetall in Frage, insbesondere Bronze, Aluminium oder Magnesium. Aber auch Kunststoff kann hier vorteilhaft eingesetzt werden.

Die vorgeschlagene Lösung wird bevorzugt in Industriegetrieben eingesetzt. Weitere bevorzugte Anwendungen sind Windenergieanlagen.

In der Zeichnung ist ein Ausführungsbeispiel der Erfindung dargestellt. Die einzige Figur zeigt den Radialschnitt durch eine Lageranordnung mit einem Gehäuse, in dem eine Welle mittels zweier Kegelrollenlager gelagert ist.

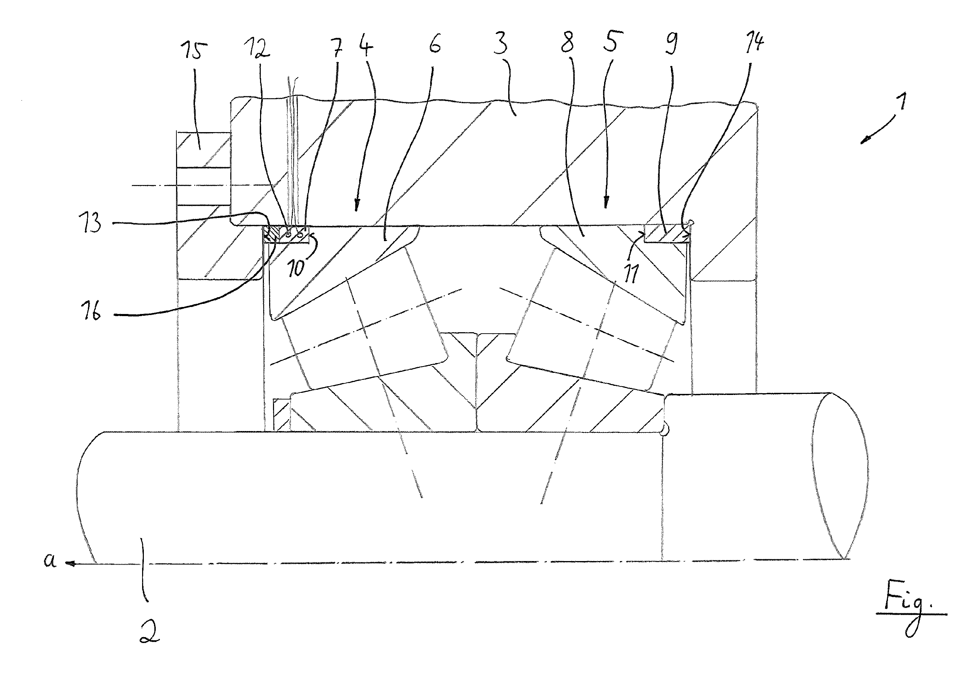

In Fig. 1 ist eine Lageranordnung 1 skizziert, mit der ein erstes Maschinenteil in Form einer Welle 2 in einem zweiten Maschinenteil in Form eines Gehäuses 3 gelagert wird. Die Lagerung erfolgt mit zwei Wälzlagern 4 und 5 die vorliegend als Kegelrollenlager ausgeführt sind (hier in X-Anordnung). Die beiden Wälzlager 4, 5 sind axial, d. h. in Richtung der Achse a der Lageranordnung, mit einer definierten Lagerluft versehen.

Die beiden Kegelrollenlager 4, 5 sind dabei also so eingestellt, dass ein definiertes axiales Lagerspiel vorliegt, das zu optimalen Betriebsbedingungen führt.

Beim Hochfahren der Lageranordnung 1 erwärmt sich die Welle 2 samt den Innenringen der beiden Kegelrollenlager 4, 5 stärker als das Gehäuse 3 mit den Außenringen 6 und 8 der beiden Kegelrollenlager 4, 5. Dies hat zur Folge, dass sich das Lagerspiel reduziert, da die beiden Lagerinnenringe axial voneinander weg gedrückt werden. Um in diesem kritischen Betriebszustand keine Lagerschädigung infolge zu hoher axialer Vorspannung zu riskieren, ist die Lagerluft hinreichend groß gewählt.

Erwärmen sich im weiteren Verlauf des Betriebs das Gehäuse 3 und die Lageraußenringe 6 und 8 allmählich, hat dies nachteilig zur Folge, dass die Lagerluft ansteigt; dies hat die eingangs genannten Nachteile zur Folge.

Um dies zu verhindern, ist vorgesehen, dass zwischen dem Außenring 6 des ersten Wälzlagers 4 und dem Gehäuse 3 ein erstes Verschiebeelement 7 wirksam angeordnet ist. Ferner ist zwischen dem Außenring 8 des zweiten Wälzlagers 5 und dem Gehäuse 3 ein zweites Verschiebeelement 9 wirksam angeordnet. Beide Verschiebeelemente 7 und 9 bewerkstelligen infolge eines großen Wärmeausdehnungskoeffizienten (der höher ist als das Material der Lagerringe 6, 8 bzw. des Gehäuses 3) bei Änderung ihrer Temperatur eine axiale Verschiebung zwischen dem sie tragenden Außenring 6 bzw. 8 und dem Gehäuse 3.

Durch besagte axiale Verschiebung der Verschiebeelemente 7, 9 werden die beiden Lageraußenringe 6, 8 aufeinander zu geschoben und so die Lagerluft wieder reduziert.

Die beiden Verschiebeelemente 7, 9 sitzen dabei in jeweiligen Ausnehmungen 10 und 11 in den Lageraußenringen 6, 8. Wie weiter zu erkennen ist, drücken die Verschiebeelemente 7, 9 (im Falle des linken Verschiebeelements 7 über einen Zwischenring 16) auf Stimflächen 13 bzw. 14 des Gehäuses 3. Die linke Stirnfläche 13 wird dabei durch eine Stirnseite eines Deckels 15 gebildet, der an das Gehäuse 3 angeschraubt ist.

Wie im Ausführungsbeispiel gesehen werden kann, sind die beiden Verschiebeelemente 7 und 9 nicht identisch ausgebildet; sie sind vielmehr unterschiedlich groß. Mit dieser Ausgestaltung kann erreicht werden, dass ein (nicht dargestelltes) Zahnrad, das auf der Welle 2 axial fest montiert ist, in einem optimalen Punkt des Zahneingriffs relativ zu einem Gegenzahnrad gehalten wird, unabhängig von der thermischen Situation der Lageranordnung.

Im gegebenen Falle - dies ist für das linke Verschiebeelement 7 angedeutet - kann auch eine Heizeinrichtung 12 in das Verschiebeelement 7 integriert oder um dasselbe angeordnet sein. Damit kann gezielt von außen ein Wachsen des Verschiebeelements bewerkstelligt und so Einfluss auf die Lagerluft bzw. auf die Vorspannsituation der Lageranordnung genommen werden.

Angedeutet ist Ausführungsbeispiel, dass elektrische Kabel zur Heizeinrichtung 12 führen, die das Verschiebeelement 7 erwärmen können. Das Erwärmen des Verschiebeelements 7 kann gegebenenfalls auch im geschlossenen Regelkreis erfolgen, wozu dann noch Messmittel vorgesehen werden müssen, die die Lage der Welle 2 relativ zum Gehäuse 3 bzw. die Höhe der Vorspannung in der Lageranordnung erfasst.

Mit besagter Erwärmung kann auch erreicht werden, dass ein Zahneingriff, wie oben erwähnt, im optimalen Eingriffspunkt bleibt.

### Bezugszeichenliste

- 1: Lageranordnung
- 2: Welle
- 3: Gehäuse
- 4: erstes Wälzlager (Kegelrollenlager)
- 5: zweites Wälzlager (Kegelrollenlager)
- 6: Außenring des ersten Wälzlagers
- 7: erstes Verschiebeelement
- 8: Außenring des zweiten Wälzlagers
- 9: zweites Verschiebeelement
- 10: Ausnehmung
- 11: Ausnehmung
- 12: Heizeinrichtung
- 13: Stirnfläche
- 14: Stirnfläche
- 15: Deckel
- 16: Zwischenring

- a: axiale Richtung

## Patentansprüche

1. Lageranordnung (1) zur Lagerung einer Welle (2) in einem Gehäuse (3), umfassend ein erstes Wälzlager (4) und ein zweites Wälzlager (5), wobei die beiden Wälzlager (4, 5) unter axialer Vorspannung oder mit definierter axialer Lagerluft in der Lageranordnung (1) eingebaut sind, wobei zwischen dem Außenring (6) des ersten Wälzlagers (4) und dem Gehäuse (3) ein erstes Verschiebeelement (7) wirksam angeordnet ist, wobei zwischen dem Außenring (8) des zweiten Wälzlagers (5) und dem Gehäuse (3) ein zweites Verschiebeelement (9) wirksam angeordnet ist und wobei beide Verschiebeelemente (7, 9) bei Änderung ihrer Temperatur eine axiale Verschiebung zwischen dem sie tragenden Außenring (6, 8) und dem Gehäuse (3) bewerkstelligen,
**dadurch gekennzeichnet,**
**dass** mindestens eines der beiden Verschiebeelemente (7, 9) mit einer Heizeinrichtung (12) versehen ist.

2. Lageranordnung nach Anspruch 1, **dadurch gekennzeichnet, dass** die beiden Wälzlager (4, 5) Kegelrollenlager sind.

3. Lageranordnung nach Anspruch 2, **dadurch gekennzeichnet, dass** die beiden Kegelrollenlager (4, 5) in X-Anordnung positioniert sind.

4. Lageranordnung nach einem der Ansprüche 1 bis 3, **dadurch gekennzeichnet, dass** die beiden Verschiebeelemente (7, 9) in Ausnehmungen (10, 11), insbesondere Eindrehungen, der Außenring (6, 8) angeordnet sind.

5. Lageranordnung nach einem der Ansprüche 1 bis 4, **dadurch gekennzeichnet, dass** auf der Welle (2) mindestens ein Zahnrad angeordnet ist, wobei die beiden Verschiebeelemente (7, 9) insbesondere unterschiedlich ausgebildet sind.

6. Lageranordnung nach einem der Ansprüche 1 bis 5, **dadurch gekennzeichnet, dass** die Heizeinrichtung (12) ein elektrisches Heizelement ist.

7. Lageranordnung nach einem der Ansprüche 1 bis 6, **dadurch gekennzeichnet, dass** die beiden Verschiebeelemente (7, 9) aus einem Material mit hohem Wärmeausdehnungskoeffizienten bestehen, insbesondere aus einem Leichtmetall oder aus Kunststoff.

8. Lageranordnung nach einem der Ansprüche 1 bis 7, **dadurch gekennzeichnet, dass** die beiden Verschiebeelemente (7, 9) direkt oder indirekt an einer Stirnfläche (13, 14) anliegen, die im Gehäuse (3) ausgebildet ist.

9. Lageranordnung nach Anspruch 8, **dadurch gekennzeichnet, dass** eine Stirnfläche (13) durch einen Deckel (15) gebildet wird, der am Gehäuse (3) angeschraubt ist.
